# EUROPÄISCHE PATENTANMELDUNG

(11) **EP 1 057 945 A2**
(43) Veröffentlichungstag der Anmeldung: **06.12.2000**
(21) Anmeldenummer: 00111641.7
(22) Anmeldetag: 31.05.2000
(51) Int. Cl.: E04B 1/76

(54) **Dämmstoff, insbesondere Wärmedämmstoff**

(30) Priorität: 31.05.1999 DE 29909493 U; 30.05.2000 DE 20009590 U
(71) Anmelder: Bieler, Johannes, 82297 Hofhagnenberg (DE); Drewer, Arnold, 33102 Paderborn (DE)
(72) Erfinder: Bieler, Johannes, 82297 Hofhagnenberg (DE); Drewer, Arnold, 33102 Paderborn (DE)
(74) Vertreter: Mierswa, Klaus, Dipl.-Ing.

(57) **Zusammenfassung**

Die Erfindung betrifft einen Dämmstoff, insbesondere Wärmedämmstoff, zur Verwendung in der Bau- und Dämmindustrie. Der Dämmstoff besteht aus einer Mischung von Einzelkörpern (1,1',6), nämlich Körner oder Perlen oder Bruchstücke oder Granulat oder Häckselgut oder Pellets, aus riesel- oder schüttfähigem Material und einem zerfaserten Fasermaterial (2,2',4,5) bzw. Fasern, welche die Einzelkörper (1,1',6) umgeben. Die Fasern bzw. das Fasermaterial ist Zellulose, vorzugsweise in fein zerfaserten Fasern (2,2',4,5), oder Holzfasern.

## Beschreibung

Die Erfindung betrifft einen Dämmstoff, insbesondere Wärmedämmstoff zur Verwendung in der Bau- und Dämmindustrie, gemäß dem Oberbegriff des Anspruchs 1.

Die Verwendung von geblähtem Perlitegestein in der Bau- und Dämmindustrie, welches in Form von Körnern oder Perlen vorliegt und welches deshalb auch zu Schüttungen verwendet werden kann, ist bekannt. Perlite haben eine hohe Hitze- und Feuerdämmung, besitzen jedoch eine relativ schlechte Wärmedämmung aufgrund einer niedrigen Wärmeleitzahl. Des Weiteren besitzen derartige Perlite, wie auch eine reihe anderer riesel- oder schüttfähiger Materialien, ein schlechtes Setzungsverhalten, was bedeutet, dass nach dem Einfüllen oder Einschütten in Räume zur Wärme- oder auch Schalldämmung, ein Absetzen des Materials erfolgt, so dass zur Vermeidung von Kältebrücken Material nachgeschüttet werden muß. Ebenso ist es nachteilig, dass nach gewisser Zeit, zum Beispiel nach einigen Tagen, eine Nachschüttung erfolgen muß. Dazu aber müssen Revisionsöffnungen an den zu verfüllenden Räumen vorgesehen werden, was nachteilig ist.

Ebenso ist die Verwendung von Zellulose als Dämmstoff in der Bau- und Dämm-industrie bekannt. Zellulose besitzt eine gute Wärmedämmung aufgrund einer hohen Wärmeleitzahl und läßt sich in loser Form blasfähig verarbeiten. Zellulose läßt sich jedoch nur bedingt als loser Einblasdämmstoff verwenden, weil die Brennbarkeit relativ hoch ist und deshalb bei der Verarbeitung von Zellulose erhöhte Brandschutzbedingungen eingehalten werden müssen. Ebenso ist die erreichbare Dichte bei der Verarbeitung relativ gering.

Der Erfindung liegt die Aufgabe zugrunde, einen Dämmstoff der eingangs genannten Gattung zu schaffen, welcher die positiven Eigenschaften von riesel- oder schüttfähigen Materialien, welche zur Wärme- oder Schalldämmung im Bauwesen verwendet werden, und fein zerfasertem Fasermaterial, wie Zellulose in Form von Fasern oder Wolle, vereinigt.

Die Lösung der Aufgabe besteht erfindungsgemäß darin, dass derselbe aus einer Mischung von Einzelkörpern, nämlich Körner oder Perlen oder Bruchstücke oder Granulat oder Häckselgut oder Pellets, aus riesel- oder schüttfähigem Material und einem zerfaserten Fasermaterial bzw. Fasern besteht, welche die Einzelkörper umgeben. Die Fasern bzw. das Fasermaterial umhüllen die Einzelkörper des riesel- oder schüttfähigen Materials vollständig. Die Fasern bzw. das Fasermaterial sind Zellulose in hochzerfasertem Zustand oder Zellulosewolle, vorzugsweise in fein zerfaserten Fasern, oder auch fein zerfaserte Holzfasern. Die Einzelkörper des riesel- oder schüttfähigen Materials sind Körner oder Perlen oder Bruchstücke oder Granulat oder Häckselgut oder Pellets, wie zum Beispiel Körner oder Perlen aus geblähtem Perlitegestein, Bruchstücke oder Schrot aus Kork, Korkschrot, Holzgranulat oder Holzhäcksel oder Schilfhäcksel oder Pellets aus gepreßtem Holz (gepreßte Körper aus Mahlgut).

Der erfindungsgemäße Dämmstoff besitzt den Vorteil, dass derselbe die positiven Eigenschaften von schütt- oder rieselfähigen Materialien aus Einzelkörpern, wie derartige Materialien im Bauwesen zur Wärme- oder Schalldämmung verwendet werden, und hochzerfasertem Material, vorzugsweise Zellulose, vereinigt. Die die Einzelkörper umhüllenden Fasern, wie Zellulose, optimiert die Setzungseigenschaften der Einzelkörper und verbessert deren Wärmeleitzahl erheblich. Ebenso bleiben die mit Fasern umhüllten Einzelkörper schüttfähig als Schüttdämmstoff und können insbesondere nunmehr auch blasfähig als Einblasdämmstoff verarbeitet werden. Nach dem Einbringen des Dämmstoffs findet praktisch kein weiteres Absetzen desselben mehr statt; der Dämmstoff besitzt aufgrund der auftretenden Verfilzung des Fasermaterials, wie Zellulosefasern und Zellulosewolle, der einzelnen Einzelkörper untereinander eine hohe Setzungssicherheit.

Ebenso kann die Mischung aus Einzelkörpern des riesel- oder schüttfähigen Materials und Fasern zu Platten gepreßt oder zu flexiblen Matten verarbeitet sein. In diesem Fall kann der Mischung von Einzelkörpern und Fasern, vorzugsweise Zellulosefasern, zur Bildung von Platten oder Matten Klebstoff zugefügt sein.

Gleichermaßen bildet die Mischung aus Einzelkörpern und Fasern eine blasfähige oder schüttfähige, lose-zusammenhängende Form und liegt als Einblasdämmstoff oder als Schüttdämmstoff vor.

In weiterer vorteilhafter Ausgestaltung besteht der Dämmstoff aus einer Mischung von Einzelkörpern unterschiedlicher Materialien und Faserdämmstoff in Form von zerfaserten Fasern oder Faserwolle, welche die Einzelkörper der inhomogenen Mischung aus unterschiedlichen Materialien innig umgeben. Damit können zuerst Mischungen aus unterschiedlichen schütt- oder rieselfähigen Materialien zusammengestellt werden, wonach anschließend die Einzelkörper dieser inhomogenen Mischung mit den Fasern umhüllt wird.

Die Erfindung stellt einen Dämmstoff zur Verfügung zur Verwendung einer Mischung von Einzelkörpern, nämlich Körner oder Perlen oder Bruchstücke oder Granulat oder Häckselgut oder Pellets, aus riesel- oder schüttfähigem Material und Faserdämmstoff in zerfaserter Form, welche Fasern die Einzelkörper umgeben, als Einblasdämmstoff oder Schüttdämmstoff in lose-zusammenhängender Form sowie zu Platten oder Matten verpreßt zur Wärmedämmung in der Bau- und Dämmindustrie.

Beispiele der Erfindung sind in der Zeichnung dargestellt und anschließend beschrieben; dabei zeigen:
- Figur 1: eine schematische Darstellung einer Vielzahl von Körnern oder Perlen aus geblähtem Perlitgestein mit die einzelnen Körner oder Perlen umhüllenden Zellulosefasern
- Figur 2: eine schematisch-perspektivische Ansicht eines Teils einer Platte, die aus einer verpreßten Mischung aus Körnern oder Perlen aus geblähtem Perlitgestein und umhüllenden Zellulosefasern besteht und
- Figur 3: eine lose Schüttung von geblähtem Perlitgestein und Zellulosefasern.

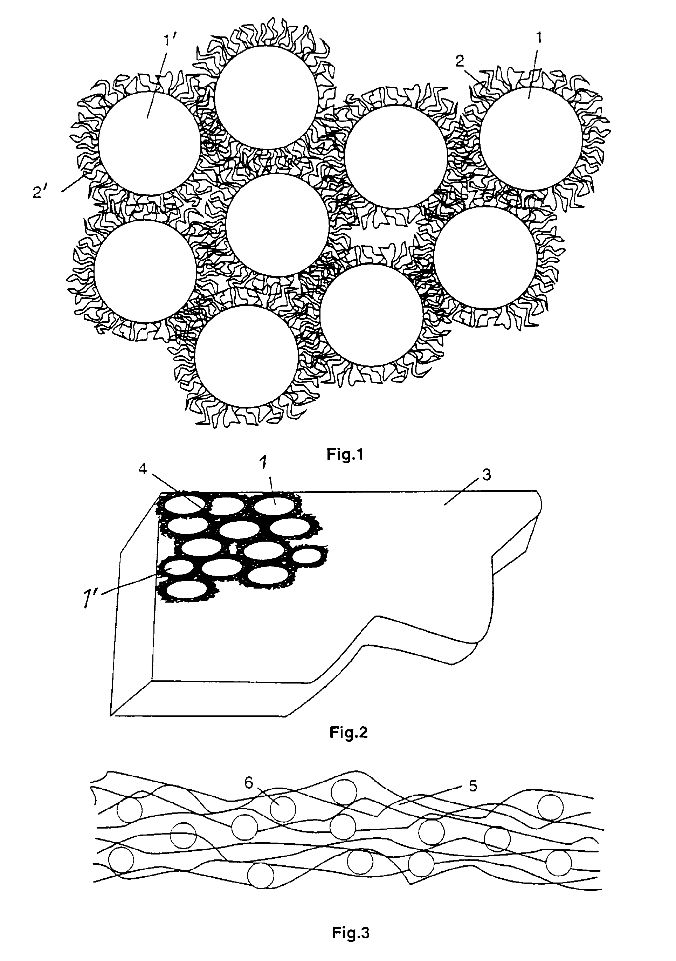

Gemäß Figur 1 besteht der erfindungsgemäße Dämmstoff aus einer Mischung von Körnern 1, 1' oder Perlen, beispielsweise aus geblähtem Perlitegestein, und Zellulosematerial in Faserform 2, 2', wobei die einzelnen Fasern 2, 2', ähnlich Wattebauschen, die einzelnen Körner 1, 1' oder Perlen innig umgeben.

Dabei umhüllen die Fasern 2, 2' aus Zellulose oder aus einem sonstigen hochzerfasertem Material, auch feinste Holzfasern, die Körner 1, 1' oder Perlen aus geblähtem Perlitegestein vollständig.

Figur 2 zeigt eine Platte 3, bestehend aus einer Mischung aus Perlitegesteinskörnern 1, 1' oder -perlen und Zellulosefasern 4, wobei diese Mischung zu Platten 3 gepreßt ist; der Mischung kann zur besseren Haltbarkeit ein Klebstoff zugesetzt sein. Ebenso können aus der Mischung flexible Matten hergestellt, beispielsweise ebenfalls verpreßt, sein. Bei der Herstellung von Platten oder Matten kann der Mischung von Körnern oder Perlen aus geblähtem Perlitegestein und Faserdämmstoff in Faserform Klebstoff zugefügt sein.

Figur 3 zeigt eine weitere Verarbeitungsform des erfindungsgemäßen Dämmstoffes, nämlich dass die Mischung aus Perlitegesteinskörnern 6 oder - perlen und Zellulosefasern 5 eine schüttfähige oder blasfähige, lose-zusammenhängende Form bildet und damit auch als Schüttdämmstoff oder Einblasdämmstoff vorliegt.

Zur Herstellung des Dämmstoffs können in einfacher Weise die Einzelkörpern, nämlich Körner oder Perlen oder Bruchstücke oder Granulat oder Häckselgut oder Pellets, aus riesel- oder schüttfähigem Material mit dem zerfaserten Fasermaterial bzw. den Fasern in einem Mischer gemischt werden, bis die Fasern jeden einzelnen Einzelkörper des Schütt- oder Rieselgutes umgeben und eine faserige Umhüllung um jeden Einzelkörper ausbilden. Auf diese Weise können sich bei der anschließenden Verfüllung von Volumina durch Schüttung oder Blasaustragung, die Einzelkörper miteinander verfilzen. Wesentlich ist die Verwendung eines Fasermaterials mit hohen Wärmedämmeigenschaften sowie einer hohen Zerfaserung und Verfilzung, damit bei der Vermischung die Fasern innig die Einzelkörper umschließen; Zellulose ist hierfür sehr gut geeignet.

### Gewerbliche Anwendbarkeit:

Der erfindungsgemäße Dämmstoff dient insbesondere als Wärmedämmstoff zur Verwendung in der Bau- und Dämmindustrie in Form von Platten oder Matten oder als loser Einblasdämmstoff oder Schüttdämmstoff.

## Patentansprüche

1. Dämmstoff, insbesondere Wärmedämmstoff, zur Verwendung in der Bauund Dämmindustrie, dadurch gekennzeichnet,
dass derselbe aus einer Mischung von Einzelkörpern (1,1',6), nämlich Körner oder Perlen oder Bruchstücke oder Granulat oder Häckselgut oder Pellets, aus riesel- oder schüttfähigem Material und einem zerfaserten Fasermaterial (2,2',4,5) bzw. Fasern besteht, welche die Einzelkörper (1,1',6) umgeben.

2. Dämmstoff nach Anspruch 1, dadurch gekennzeichnet,
dass die Fasern (2,2',4,5) bzw. das Fasermaterial die Einzelkörper (1,1',6) des riesel- oder schüttfähigen Materials vollständig umhüllen.

3. Dämmstoff nach Anspruch 1 oder 2, dadurch gekennzeichnet,
dass die Fasern bzw. das Fasermaterial Zellulose, vorzugsweise in fein zerfaserten Fasern (2,2',4,5), oder Holzfasern sind.

4. Dämmstoff nach Anspruch 1 oder 2, dadurch gekennzeichnet,
dass die Einzelkörper (1,1',6) des riesel- oder schüttfähigen Materials Körner oder Perlen oder Bruchstücke oder Granulat oder Häckselgut oder Pellets sind, wie zum Beispiel Körner oder Perlen aus geblähtem Perlitegestein, Bruchstücke oder Schrot aus Kork, Holzgranulat oder Holzhäcksel oder Schilfhäcksel oder Pellets aus gepreßtem Holz.

5. Dämmstoff nach Anspruch 1, dadurch gekennzeichnet,
dass die Mischung aus Einzelkörpern (1,1',6) des riesel- oder schüttfähigen Materials und aus Fasermaterial (2,2',4), wie Zellulosefasern, zu Platten (3) gepreßt oder zu flexiblen Matten verarbeitet ist.

6. Dämmstoff nach Anspruch 1, dadurch gekennzeichnet,
dass die Mischung aus Einzelkörpern (1,1',6) und Fasern (2,2',4,5), wie Zellulosefasern, eine blasfähige oder schüttfähige, lose-zusammenhängende Form bildet und als Einblasdämmstoff oder als Schüttdämmstoff vorliegt.

7. Dämmstoff nach Anspruch 4 oder 5, dadurch gekennzeichnet,
dass der Mischung von Einzelkörpern (1,1',6) und Fasern (2,2',4,5), wie Zellulosefasern, zur Bildung von Platten oder Matten Klebstoff zugefügt ist.

8. Dämmstoff nach einem der vorherigen Ansprüche,
dadurch gekennzeichnet, dass derselbe aus einer Mischung von Einzelkörpern unterschiedlicher Materialien und Fasern (2,2',4,5) bzw. zerfasertem Fasermaterial, wie Zellulosedämmstoff in Fasern besteht, welche die Einzelkörper (1,1',6) der inhomogenen Mischung aus unterschiedlichen Materialien umgeben.

9. Verwendung einer Mischung von Einzelkörpern (1,1',6), nämlich Körner oder Perlen oder Bruchstücke oder Granulat oder Häckselgut oder Pellets, aus riesel- oder schüttfähigem Material und Fasern (2,2',4,5) bzw. zerfasertes Material, wie Zellulosedämmstoff in Fasern oder Holzfasern, welche die Einzelkörper (1,1',6) umgeben, als Einblasdämmstoff oder Schüttdämmstoff in lose-zusammenhängender Form sowie zu Platten (4) oder Matten verpreßt zur Wärmedämmung in der Bau- und Dämmindustrie.
